# EUROPEAN PATENT SPECIFICATION

(11) **EP 3 788 928 B1**
(45) Date of publication and mention of the grant of the patent: **02.04.2025**
(21) Application number: 19796253.3
(22) Date of filing: 18.04.2019
(51) Int. Cl.: A47L 9/00, A47L 9/28, A47L 11/40, G05D 1/00, G06F 18/20

(54) **ARTIFICIAL INTELLIGENCE VACUUM CLEANER AND CONTROL METHOD THEREFOR**
STAUBSAUGER MIT KÜNSTLICHER INTELLIGENZ UND STEUERVERFAHREN DAFÜR
ASPIRATEUR À INTELLIGENCE ARTIFICIELLE ET PROCÉDÉ DE COMMANDE ASSOCIÉ

(30) Priority: 30.04.2018 KR 20180050110
(43) Date of publication of application: 10.03.2021
(73) Proprietor: LG Electronics Inc., Yeongdeungpo-gu Seoul 07336 (KR)
(72) Inventor: KIM, Junghwan, Seoul 08592 (KR); LEE, Minho, Seoul 08592 (KR)
(74) Representative: Ter Meer Steinmeister & Partner
(86) International application number: PCT/KR2019/004701
(87) International publication number: WO 2019/212174

(56) References cited:
- EP-A1- 3 079 031
- GB-A- 2 394 797
- JP-B2- 4 555 035
- KR-A- 20180 018 211
- KR-A- 20180 018 211
- KR-A- 20180 023 302
- KR-B1- 101 049 155
- KR-B1- 101 719 127
- US-A1- 2021 311 480
- US-B2- 9 429 949

## Description

### TECHNICAL FIELD

The present disclosure relates to a cleaner and a method for controlling the same, and more particularly, to a cleaner capable of recognizing an obstacle and performing autonomous traveling, and a method for controlling the same.

### BACKGROUND ART

In general, robots have been developed for industrial use and have been partially in charge of factory automation. In recent years, the field of application of robots has been expanded, and medical robots, aerospace robots, and the like have been developed, and household robots that can be used in ordinary homes have also been made.

A representative example of the home robot is a robot cleaner, which is a type of household appliance that sucks and cleans dust or foreign materials around the robot while autonomously traveling in a predetermined area. Such a robot cleaner is generally equipped with a rechargeable battery and an obstacle sensor for avoiding obstacles during traveling. Such structure allows the robot cleaner to perform cleaning while traveling by itself.

In recent years, researches have been actively carried out to utilize the robot cleaner in various fields such as health care, smart home, remote control, and the like, instead of merely performing cleaning by autonomously traveling in a cleaning area.

In particular, with development of artificial intelligence technologies in an image recognition field, robot cleaners are also increasing accuracy of identifying obstacles through image recognition equipped with artificial intelligence technologies.

However, the recognition accuracy of a robot cleaner using an image recognizer configured as a single layer is inferior to a level required by a user.

That is, since various types of obstacles may exist in a cleaning area, general robot cleaners using only one recognizer may not recognize exactly what type of obstacle is an object included in an image. KR 2018 0018211 A describes a self-learning robot. The self-learning robot comprises: a data receiving unit for sensing video data or audio data about objects located within a predetermined range; a data recognizing unit for matching data received from the data receiving unit and data included in a database in the self-learning robot; a result outputting unit for outputting a matching result of the data recognizing unit; a recognition result verifying unit for determining accuracy of the matching result; a server communicating unit for transmitting the data received from the data receiving unit to a server, when the accuracy of the matching result is less than a predetermined level as a result determined by the recognition result verifying unit; and a behavior commanding unit for causing the self-learning robot to perform a predetermined object-corresponding action, when the accuracy of the matching result is equal to or higher than the predetermined level as a result determined by the recognition result verifying unit. US 9 429 949 B2 describes a robot cleaner capable of performing a cleaning operation by selecting a cleaning algorithm suitable for the peripheral circumstances based on an analysis result of captured image information, and a controlling method thereof. The robot cleaner comprises an image sensor unit configured to capture image information when an operation instructing command is received, and a controller configured to analyze the image information captured by the image sensor unit, and configured to control a cleaning operation based on a first cleaning algorithm selected from a plurality of pre-stored cleaning algorithms based on a result of the analysis.

### DISCLOSURE

### TECHNICAL PROBLEM

One aspect of the present invention, is to provide a cleaner performing autonomous traveling, which is provided with an obstacle recognizer configured by a plurality of layers, and a method for controlling the same.

Still another aspect of the present disclosure is to provide a cleaner performing autonomous traveling, capable of improving accuracy for obstacle recognition by using an obstacle recognizer configured by a plurality of layers, and a method for controlling the same.

### TECHNICAL SOLUTION

In order to solve the technical problem of the present invention as described above, there is provided a cleaner according to independent claim 1, performing autonomous traveling, the cleaner including a main body, a driving unit configured to move the main body within a cleaning area, a camera configured to capture an area around the main body, and a control unit configured to control, on the basis of an image captured by means of the camera, the driving unit such that a predetermined traveling mode is performed.

In particular, the control unit may be configured to perform a first recognition process for determining whether the image corresponds to any one of a plurality of obstacle types, perform a second recognition process for re-determining whether the image corresponds to the one obstacle type to verify a result of the first recognition process, and control the driving unit on the basis of the obstacle type determined through the first and second recognition processes such that the main body travels in a preset pattern.

In one implementation, the control unit may include a first recognition part configured to determine whether the image corresponds to any one of the plurality of obstacle types after the image is captured, and a second recognition part configured to redetermine whether the image corresponds to the one obstacle type when the first recognition part has determined that the image corresponds to the one obstacle type.

In one implementation, the control unit may control the camera to acquire an additional image at a position where the image has been captured when the first recognition part determines that the image corresponds to the one obstacle type.

In one implementation, the second recognition part may determine whether the acquired additional image corresponds to the obstacle type determined by the first recognition part.

In one implementation, the first recognition part may perform a learning operation of setting a first recognition algorithm by using obstacle information corresponding to at least two of the plurality of obstacle types.

In one implementation, the second recognition part may perform a learning operation of setting a second recognition algorithm by using obstacle information corresponding to one of the plurality of obstacle types.

In one implementation, the first recognition part may calculate respective probabilities that the image corresponds to the plurality of obstacle types, and the second recognition part may calculate a probability that the image corresponds to at least one obstacle type corresponding to a highest probability, among the plurality of probabilities calculated by the first recognition part.

In one implementation, the control unit may compare the probabilities calculated by the first recognition part with the probability calculated by the second recognition part, and perform image recognition for the image based on a result of the comparison.

In one implementation, the second recognition part may include a plurality of recognition modules corresponding to the plurality of obstacle types, respectively.

### ADVANTAGEOUS EFFECTS

According to the present invention, since a type of obstacle included in an image can be more accurately identified by using a recognizer configured by a plurality of layers, which may result in improving performance of an autonomous cleaner.

In addition, according to the present invention, a secondary recognizer specified for any one obstacle type can verify a recognition result again by using a result of a primary recognizer commonly applied to a plurality of obstacle types, thereby improving obstacle recognition performance of an autonomous cleaner.

### BRIEF DRSCRIPTION OF THE DRAWINGS

FIG. 1 is a perspective view illustrating an example of a cleaner that performs autonomous traveling according to the present disclosure.
FIG.2 is a planar view of the cleaner that performs autonomous traveling illustrated in FIG. 1.
FIG. 3 is a lateral view of the cleaner that performs autonomous traveling illustrated in FIG. 1.
FIG. 4 is a perspective view illustrating an example of a cleaner performing autonomous traveling according to the present disclosure.
FIG. 5 is a conceptual view illustrating an example in which a cleaner and a charging station according to the present disclosure are installed in a cleaning area.
FIG. 6 is a flowchart illustrating an obstacle recognition method of a general cleaner.
FIG. 7 is a flowchart of an obstacle recognition method of a cleaner of the present disclosure.
FIG. 8 is a block diagram illustrating components of a control unit of the present disclosure.
FIG. 9 is a block diagram of components of a secondary recognition part of the present disclosure.
FIG. 10 is a flowchart of an obstacle recognition method of a cleaner of the present disclosure.

### MODES FOR CARRYING OUT THE PREFERRED IMPLEMENTATIONS

Hereinafter, description will be given in detail of implementations disclosed herein. Technical terms used in this specification are merely used for explaining specific implementations, and should not be constructed to limit the scope of the technology disclosed herein.

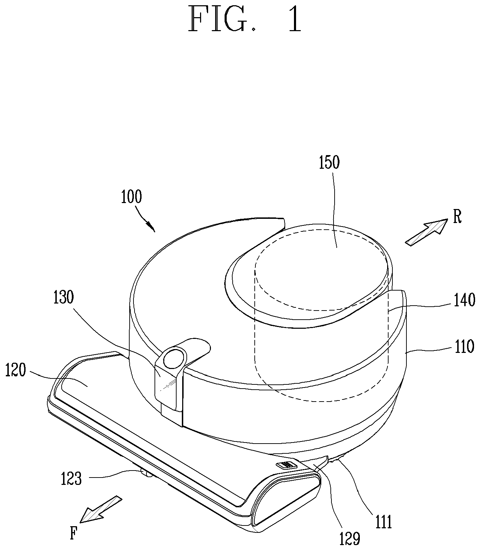

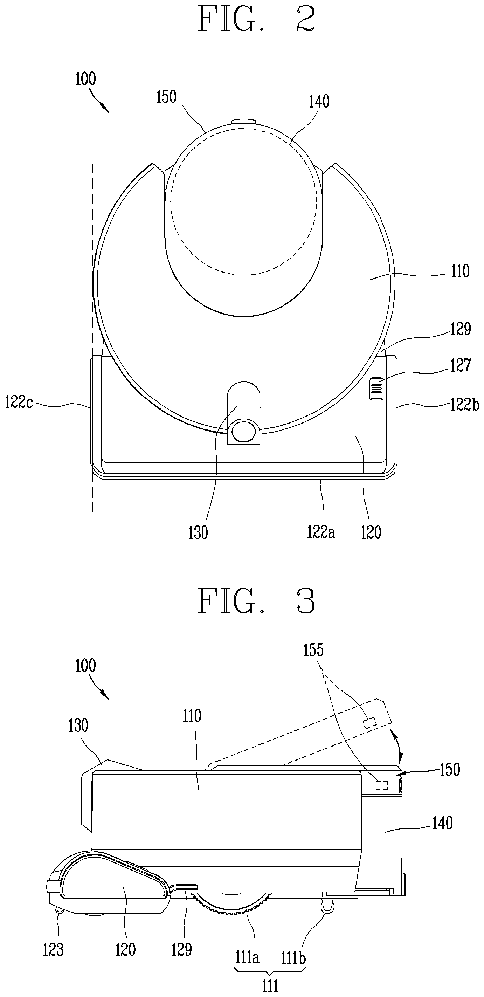

FIG. 1 is a perspective view illustrating one implementation of a robot cleaner 100 according to the present invention, FIG. 2 is a planar view of the robot cleaner 100 illustrated in FIG. 1, and FIG. 3 is a lateral view of the robot cleaner 100 illustrated in FIG. 1.

For reference, in this specification, a mobile robot, a robot cleaner, and a cleaner that performs autonomous traveling may be used in the same sense.

Referring to FIGS. 1 to 3, a robot cleaner 100 performs a function of cleaning a floor while traveling on a predetermined area by itself. Cleaning of a floor mentioned here includes sucking dust (including foreign matter) on the floor or mopping the floor.

The robot cleaner 100 may include a cleaner main body 110, a suction unit 120, a sensing unit 130, and a dust container 140.

The cleaner body 110 is provided with a control unit (not shown) for the control of the robot cleaner 100 and a wheel unit 111 for the traveling of the robot cleaner 100. The robot cleaner 100 may move forward, backward, leftward and rightward by the wheel unit 111.

The wheel unit 111 includes main wheels 111a and a sub wheel 111b.

The main wheels 111a are provided on both sides of the cleaner body 110 and configured to be rotatable in one direction or another direction according to a control signal of the control unit. Each of the main wheels 111a may be configured to be driven independently of each other. For example, each main wheel 111a may be driven by a different motor.

The sub wheel 111b supports the cleaner main body 110 together with the main wheels 111a and assists the traveling of the robot cleaner 100 by the main wheels 111a. The sub wheel 111b may also be provided on a suction unit 120 to be described later.

As described above, the control unit is configured to control the traveling of the wheel unit 111 in such a manner that the robot cleaner 100 autonomously travels on the floor.

Meanwhile, a battery (not shown) for supplying power to the robot cleaner 100 is mounted on the cleaner body 110. The battery may be configured to be rechargeable, and configured to be detachable from a bottom portion of the cleaner body 110.

The suction unit 120 is disposed to protrude from one side of the cleaner main body 110 to suck air containing dust. The one side may be a side on which the cleaner body 110 travels in a forward direction (F), that is, a front side of the cleaner body 110.

In the present drawing, it is shown that the suction unit 120 is protruded from one side of the cleaner body 110 to a front side and both left and right sides thereof. Specifically, a front end portion of the suction unit 120 is disposed at a position spaced forward apart from the one side of the cleaner main body 110, and left and right end portions of the suction unit 120 are disposed at positions spaced apart from the one side of the cleaner main body 110 in the right and left directions.

As the cleaner main body 110 is formed in a circular shape and both sides of a rear end portion of the suction unit 120 protrude from the cleaner main body 110 to both left and right sides, empty spaces, namely, gaps may be formed between the cleaner main body 110 and the suction unit 120. The empty spaces are spaces between both left and right end portions of the cleaner main body 110 and both left and right end portions of the suction unit 120 and each has a shape recessed into the robot cleaner 100.

If an obstacle is caught in the empty space, the robot cleaner 100 may be likely to be unmovable due to the obstacle. In order to prevent this, a cover member 129 may be disposed to cover at least part of the vacant space. The cover member 129 may be provided on the cleaner main body 110 or the suction unit 120. In this implementation of the present disclosure, the cover member 129 protrudes from each of both sides of the rear end portion of the suction unit 120 and covers an outer circumferential surface of the cleaner main body 110.

The cover member 129 is disposed to fill at least part of the empty space, that is, the empty space between the cleaner main body 110 and the suction unit 120. Therefore, it may be possible to implement a structure capable of preventing an obstacle from being caught in the vacant space, or being easily released from the obstacle even when the obstacle is caught in the vacant space.

The cover member 129 formed to protrude from the suction unit 120 may be supported on an outer circumferential surface of the cleaner body 110. If the cover member 129 is formed in a protruding manner from the cleaner body 110, then the cover member 129 may be supported on a rear portion of the suction unit 120. According to this structure, when the suction unit 120 is impacted due to colliding with an obstacle, a part of the impact is transferred to the cleaner main body 110 so as to be dispersed.

The suction unit 120 may be detachably coupled to the cleaner main body 110. When the suction unit 120 is detached from the cleaner main body 110, a mop module (not shown) may be detachably coupled to the cleaner main body 110 in place of the detached suction unit 120. Accordingly, the user can mount the suction unit 120 on the cleaner main body 110 when the user wishes to remove dust on the floor, and may mount the mop module on the cleaner main body 110 when the user wants to mop the floor.

When the suction unit 120 is mounted on the cleaner main body 110, the mounting may be guided by the cover member 129 described above. That is, as the cover member 129 is disposed to cover the outer circumferential surface of the cleaner main body 110, a relative position of the suction unit 120 with respect to the cleaner main body 110 may be determined.

A sensing unit 130 is disposed in the cleaner body 110. As illustrated, the sensing unit 130 may be disposed on one side of the cleaner main body 110 where the suction unit 120 is located, that is, on a front side of the cleaner main body 110.

The sensing unit 130 may be disposed to overlap the suction unit 120 in an up and down direction of the cleaner main body 110. The sensing unit 130 is disposed at an upper portion of the suction unit 120 so as to detect an obstacle or feature in front of the robot so that the suction unit 120 positioned at the forefront of the robot cleaner 100 does not hit the obstacle.

The sensing unit 130 is configured to additionally perform another sensing function in addition to the sensing function. This will be described in detail later.

The cleaner main body 110 is provided with a dust container accommodating portion. The dust container 140 in which dust separated from the sucked air is collected is detachably coupled to the dust container accommodating portion. As illustrated in the drawing, the dust box accommodation portion 113 may be formed on the other side of the cleaner body 110, namely, behind the cleaner body 110.

A part of the dust box 140 is accommodated in the dust box accommodation portion 113 and another part of the dust box 140 is formed to protrude toward a rear side of the cleaner body 110 (i.e., a reverse direction (R) opposite to a forward direction (F)).

The dust box 140 is formed with an inlet 140a through which air containing dust is introduced and an outlet 140b through which air separated from dust is discharged, and when the dust box 140 is installed in the dust box accommodation portion 113, the inlet 140a and the outlet 140b are configured to communicate with a first opening 110a and a second opening 110b formed in an inner wall of the dust box accommodation portion 113, respectively.

The intake passage in the cleaner body 110 corresponds to a passage from the inlet port (not shown) communicating with the communicating portion 120b to the first opening 110a, and the discharge passage corresponds to a passage from the second opening 110b to the discharge port 112.

According to such connection, air containing dust introduced through the suction unit 120 flows into the dust container 140 through the intake passage inside the cleaner main body 110 and the air is separated from the dust while passing through a filter and cyclone of the dust container 140. Dust is collected in the dust box 140, and air is discharged from the dust box 140 and then discharged to the outside through the discharge port 112 in the cleaner body 110 and finally through the discharge port 112.

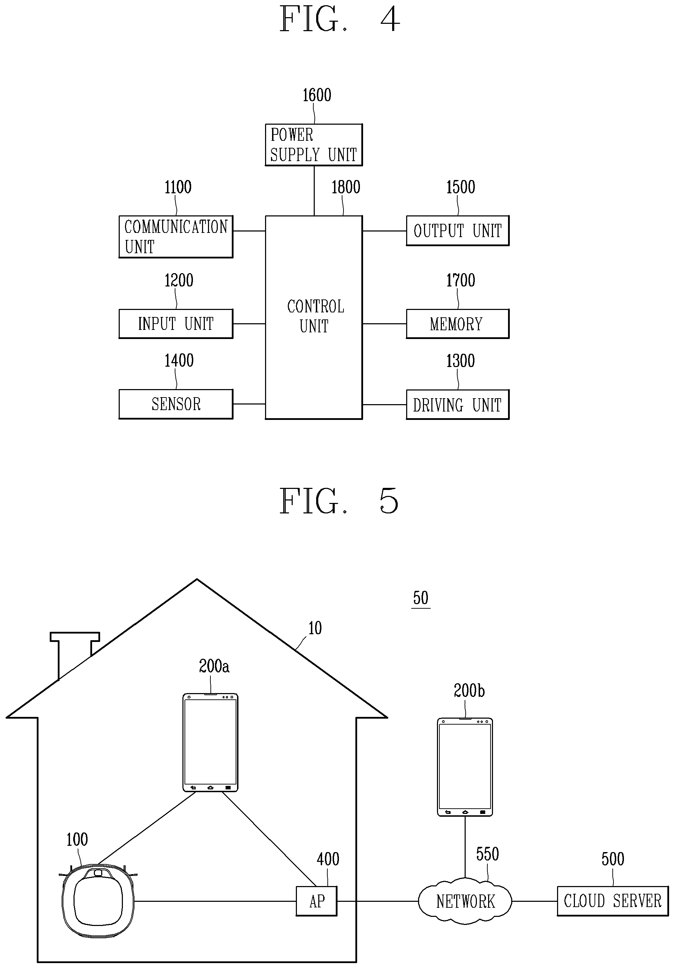

An implementation related to the components of the robot cleaner 100 will be described below with reference to FIG. 4.

A robot cleaner 100 or a mobile robot according to an implementation of the present disclosure may include at least one of a communication unit 1100, an input unit 1200, a driving unit 1300, a sensing unit 1400, an output unit 1500, a power supply unit 1600, a memory 1700, and a control unit 1800, or a combination thereof.

At this time, those components shown in FIG. 4 are not essential, and a robot cleaner having greater or fewer components can be implemented. Hereinafter, each component will be described.

First, the power supply unit 1600 includes a battery that can be charged by an external commercial power supply, and supplies power to the mobile robot. The power supply unit 1600 supplies driving force to each of the components included in the mobile robot to supply operating power required for the mobile robot to travel or perform a specific function.

Here, the control unit 1800 may sense the remaining power of the battery, and control the battery to move power to a charging base connected to the external commercial power source when the remaining power is insufficient, and thus a charge current may be supplied from the charging base to charge the battery. The battery may be connected to a battery sensing portion so that a remaining power level and a charging state can be transmitted to the control unit 1800. The output unit 1500 may display the remaining battery level on a screen under the control of the control unit.

The battery may be located in a bottom portion of a center of the robot cleaner, or may be located in either the left or right side. In the latter case, the mobile robot may further include a balance weight for eliminating a weight bias of the battery.

On the other hand, the driving unit 1300 may include a motor, and operate the motor to bidirectionally rotate left and right main wheels, so that the main body can rotate or move. The driving unit 1300 may allow the main body of the mobile robot to move forward, backward, leftward and rightward, travel in a curved manner or rotate in place.

Meanwhile, the input unit 1200 receives various control commands for the robot cleaner from the user. The input unit 1200 may include one or more buttons, for example, the input unit 1200 may include an OK button, a set button, and the like. The OK button is a button for receiving a command for confirming sensing information, obstacle information, position information, and map information from the user, and the set button is a button for receiving a command for setting the information from the user.

In addition, the input unit 1200 may include an input reset button for canceling a previous user input and receiving a new user input, a delete button for deleting a preset user input, a button for setting or changing an operation mode, a button for receiving an input to return to the charging base, and the like.

In addition, the input unit 1200 may be implemented as a hard key, a soft key, a touch pad, or the like and may be disposed on a top of the mobile robot. For example, the input unit 1200 may implement a form of a touch screen together with the output unit 1500.

On the other hand, the output unit 1500 may be installed on a top of the mobile robot. Of course, the installation position and installation type may vary. For example, the output unit 1500 may display a battery level state, a traveling mode or manner, or the like on a screen.

The output unit 1500 may output internal status information of the mobile robot detected by the sensing unit 1400, for example, a current status of each component included in the mobile robot. The output unit 1500 may also display external status information detected by the sensing unit 1400, obstacle information, position information, map information, and the like on the screen. The output unit 1500 may be configured as one device of a light emitting diode (LED), a liquid crystal display (LCD), a plasma display panel, and an organic light emitting diode (OLED).

The output unit 1500 may further include an audio output module for audibly outputting information related to an operation of the mobile robot executed by the control unit 1800 or an operation result. For example, the output unit 1500 may output a warning sound to the outside in accordance with a warning signal generated by the control unit 1800.

Here, the sound output device may be a device for outputting sound such as a beeper, a speaker, or the like, and the output unit 1500 may output the sound to the outside through the sound output device using audio data or message data having a predetermined pattern stored in the memory 1700.

Accordingly, the mobile robot according to one implementation of the present disclosure can output environmental information related to a travel area through the output unit 1500 or output the same in an audible manner. According to another implementation, the mobile robot may transmit map information or environmental information to a terminal device through the communication unit 1100 so that the terminal device outputs a screen to be output through the output unit 1500 or sounds.

On the other hand, the communication unit 1100 is connected to the terminal device and/or another device (mixed with term "home appliance" in this specification) located in a specific area in one of wired, wireless, satellite communication methods to transmit and receive signals and data.

The communication unit 1100 may transmit and receive data with another located in a specific area. Here, the another device may be any device capable of connecting to a network to transmit and receive data, and for example, the device may be an air conditioner, a heating device, an air purification device, a lamp, a TV, an automobile, or the like. The another device may also be a device for controlling a door, a window, a water supply valve, a gas valve, or the like. The another device may also be a sensor for detecting temperature, humidity, air pressure, gas, or the like.

The memory 1700 stores a control program for controlling or driving the robot cleaner and data corresponding thereto. The memory 1700 may store audio information, image information, obstacle information, position information, map information, and the like. Also, the memory 1700 may store information related to a traveling pattern.

The memory 1700 mainly uses a nonvolatile memory. Here, the non-volatile memory (NVM, NVRAM) is a storage device that can continuously store information even when power is not supplied. Examples of the storage device include a ROM, a flash memory, a magnetic computer storage device (e.g., a hard disk, a diskette drive, a magnetic tape), an optical disk drive, a magnetic RAM, a PRAM, and the like.

Meanwhile, the sensing unit 1400 may include at least one of an impact sensor, an external signal detection sensor, a front detection sensor, a cliff detection sensor, a lower camera sensor, an upper camera sensor and a three-dimensional camera sensor.

The impact sensor may be provided at least one point on an outer surface of the main body, and may sense a physical force applied to the point.

In one example, the impact sensor may be disposed on the outer surface of the main body to be directed toward the front of the main body. In another example, the impact sensor may be disposed on the outer surface of the body to be directed to the rear of the body. In another example, the impact sensor may be disposed on the outer surface of the main body to be directed toward the left or right side of the main body.

The external signal sensor or external signal detection sensor may sense an external signal of the mobile robot. The external signal detection sensor may be, for example, an infrared ray sensor, an ultrasonic sensor, a radio frequency (RF) sensor, or the like.

The mobile robot may detect a position and direction of the charging base by receiving a guidance signal generated by the charging base using the external signal sensor. At this time, the charging base may transmit a guidance signal indicating a direction and distance so that the mobile robot can return thereto. That is, the mobile robot may determine a current position and set a moving direction by receiving a signal transmitted from the charging base, thereby returning to the charging base.

On the other hand, the front sensors or front detection sensors may be installed at a predetermined distance on the front of the mobile robot, specifically, along a circumferential surface of a side surface of the mobile robot. The front sensor is located on at least one side surface of the mobile robot to detect an obstacle in front of the mobile robot. The front sensor may detect an object, especially an obstacle, existing in a moving direction of the mobile robot and transmit detection information to the control unit 1800. That is, the front sensor may detect protrusions on the moving path of the mobile robot, household appliances, furniture, walls, wall corners, and the like, and transmit the information to the control unit 1800.

For example, the frontal sensor may be an infrared ray (IR) sensor, an ultrasonic sensor, an RF sensor, a geomagnetic sensor, or the like, and the mobile robot may use one type of sensor as the front sensor or two or more types of sensors if necessary.

For an example, the ultrasonic sensors may be mainly used to sense a distant obstacle in general. The ultrasonic sensor may include a transmitter and a receiver, and the control unit 1800 may determine whether or not there exists an obstacle based on whether or not ultrasonic waves radiated through the transmitter is reflected by the obstacle or the like and received at the receiver, and calculate a distance to the obstacle using the ultrasonic emission time and ultrasonic reception time.

Furthermore, the control unit 1800 may compare ultrasonic waves emitted from the transmitter and ultrasonic waves received at the receiver to detect information related to a size of the obstacle. For example, the control unit 1800 may determine that the obstacle is larger in size when more ultrasonic waves are received in the receiver.

In one implementation, a plurality (e.g., five) of ultrasonic sensors may be installed on side surfaces of the mobile robot at the front side along an outer circumferential surface. At this time, the ultrasonic sensors may preferably be installed on the front surface of the mobile robot in a manner that the transmitter and the receiver are alternately arranged.

That is, the transmitters may be disposed at right and left sides with being spaced apart from a front center of the main body or one transmitter or at least two transmitters may be disposed between the receivers so as to form a reception area of an ultrasonic signal reflected from an obstacle or the like. With this arrangement, the receiving area may be expanded while reducing the number of sensors. A radiation angle of ultrasonic waves may be maintained in a range of avoiding an affection to different signals so as to prevent a crosstalk. Furthermore, the receiving sensitivities of the receivers may be set to be different from each other.

In addition, the ultrasonic sensor may be installed upward by a predetermined angle so that the ultrasonic waves emitted from the ultrasonic sensor are output upward. In this instance, the ultrasonic sensor may further include a predetermined blocking member to prevent the ultrasonic waves from being radiated downward.

On the other hand, as described above, the front sensor may be implemented by using two or more types of sensors together, and thus the front sensor may use any one of an IR sensor, an ultrasonic sensor, an RF sensor and the like.

For example, the front sensor may include an IR sensor as another sensor, in addition to the ultrasonic sensor.

The IR sensor may be installed on an outer circumferential surface of the mobile robot together with the ultrasonic sensor. The infrared sensor may also sense an obstacle existing at the front or the side to transmit obstacle information to the control unit 1800. That is, the IR sensor senses a protrusion, a household fixture, furniture, a wall, a wall edge, and the like, existing on the moving path of the mobile robot, and transmits detection information to the control unit 1800. Therefore, the mobile robot may move within a specific region without collision with the obstacle.

On the other hand, a cliff sensor (or cliff detection sensor) may detect an obstacle on the floor supporting the main body of the mobile robot by mainly using various types of optical sensors.

That is, the cliff sensor may also be installed on a rear surface of the mobile robot on the floor, but may be installed on a different position depending on a type of the mobile robot. The cliff sensor is located on the rear surface of the mobile robot and detects an obstacle on the floor. The cliff sensor may be an IR sensor, an ultrasonic sensor, an RF sensor, a Position Sensitive Detector (PSD) sensor, and the like, which include a transmitter and a receiver, similar to the obstacle detection sensor.

For an example, any one of the cliff detection sensors may be installed in front of the mobile robot, and the other two cliff detection sensors may be installed relatively behind.

For example, the cliff sensor may be a PSD sensor, but may alternatively be configured by a plurality of different kinds of sensors.

The PSD sensor detects a short/long distance location of incident light at one p-n junction using semiconductor surface resistance. The PSD sensor includes a one-dimensional PSD sensor that detects light only in one axial direction, and a two-dimensional PSD sensor that detects a light position on a plane. Both of the PSD sensors may have a pin photodiode structure. The PSD sensor is a type of infrared sensor that uses infrared rays to transmit infrared rays and then measure an angle of infrared rays reflected from and returned back to an obstacle so as to measure a distance. That is, the PSD sensor calculates a distance from the obstacle by using the triangulation method.

The PSD sensor includes a light emitter that emits infrared rays to an obstacle and a light receiver that receives infrared rays that are reflected and returned from the obstacle, and is configured typically as a module type. When an obstacle is detected by using the PSD sensor, a stable measurement value may be obtained irrespective of reflectivity and color difference of the obstacle.

The control unit 1800 may measure an infrared angle between an emission signal of infrared rays emitted from the cliff detection sensor toward the ground and a reflection signal reflected and received by the obstacle to sense a cliff and analyze the depth thereof.

Meanwhile, the control unit 1800 may determine whether to pass a cliff or not according to a ground state of the detected cliff by using the cliff detection sensor, and decide whether to pass the cliff or not according to the determination result. For example, the control unit 1800 determines presence or non-presence of a cliff and a depth of the cliff through the cliff sensor, and then allows the mobile robot to pass through the cliff only when a reflection signal is detected through the cliff sensor.

As another example, the control unit 1800 may also determine lifting of the mobile robot using the cliff sensor.

On the other hand, the lower camera sensor is provided on the rear surface of the mobile robot, and acquires image information regarding the lower side, that is, the bottom surface (or the surface to be cleaned) during the movement. The lower camera sensor is also referred to as an optical flow sensor in other words. The lower camera sensor converts a lower image input from an image sensor provided in the sensor to generate image data of a predetermined format. The generated image data may be stored in the memory 1700.

Also, at least one light source may be installed adjacent to the image sensor. The one or more light sources irradiate light to a predetermined region of the bottom surface captured by the image sensor. That is, while the mobile robot moves in a specific area along the floor surface, a constant distance is maintained between the image sensor and the floor surface when the floor surface is flat. On the other hand, when the mobile robot moves on a floor surface which is not flat, the image sensor and the floor surface are spaced apart from each other by a predetermined distance due to an unevenness and an obstacle on the floor surface. At this time, the at least one light source may be controlled by the control unit 1800 to adjust an amount of light to be emitted. The light source may be a light emitting device, for example, a light emitting diode (LED), which is capable of adjusting an amount of light.

The control unit 1800 may detect a position of the mobile robot irrespective of slippage of the mobile robot, using the lower camera sensor. The control unit 1800 may compare and analyze image data captured by the lower camera sensor according to time to calculate a moving distance and a moving direction, and calculate a position of the mobile robot based on the calculated moving distance and moving direction. By using the image information regarding the lower side of the mobile robot captured by the lower camera sensor, the control unit 1800 may perform correction that is robust against slippage with respect to the position of the mobile robot calculated by another element.

On the other hand, the upper camera sensor may be installed to face a top or front of the mobile robot so as to capture the vicinity of the mobile robot. When the mobile robot includes a plurality of upper camera sensors, the camera sensors may be disposed on the upper or side surface of the mobile robot at predetermined distances or at predetermined angles.

The three-dimensional camera sensor may be attached to one side or a part of the main body of the mobile robot to generate three-dimensional coordinate information related to the surroundings of the main body.

In other words, the three-dimensional camera sensor may be a 3D depth camera that calculates a near and far distance of the mobile robot and an object to be captured.

Specifically, the 3D camera sensor may capture 2D images related to surroundings of the main body, and generate a plurality of 3D coordinate information corresponding to the captured 2D images.

In one implementation, the three-dimensional camera sensor may include two or more cameras that acquire a conventional two-dimensional image, and may be formed in a stereo vision manner to combine two or more images obtained from the two or more cameras so as to generate three-dimensional coordinate information.

Specifically, the three-dimensional camera sensor according to the implementation may include a first pattern irradiation unit for irradiating light with a first pattern in a downward direction toward the front of the main body, and a second pattern irradiation unit for irradiating the light with a second pattern in an upward direction toward the front of the main body, and an image acquisition unit for acquiring an image in front of the main body. As a result, the image acquisition unit may acquire an image of a region where light of the first pattern and light of the second pattern are incident.

In another implementation, the three-dimensional camera sensor may include an infrared ray pattern emission unit for irradiating an infrared ray pattern together with a single camera, and capture the shape of the infrared ray pattern irradiated from the infrared ray pattern emission unit onto the object to be captured, thereby measuring a distance between the sensor and the object to be captured. Such a three-dimensional camera sensor may be an IR (infrared) type three-dimensional camera sensor.

In still another implementation, the three-dimensional camera sensor may include a light emitting unit that emits light together with a single camera, receive a part of laser emitted from the light emitting unit reflected from the object to be captured, and analyze the received laser, thereby measuring a distance between the three-dimensional camera sensor and the object to be captured. The three-dimensional camera sensor may be a time-of-flight (TOF) type three-dimensional camera sensor.

Specifically, the laser of the above-described three-dimensional camera sensor is configured to irradiate a laser beam in the form of extending in at least one direction. In one example, the 3D camera sensor may be provided with first and second lasers. The first laser irradiates linear laser beams intersecting each other, and the second laser irradiates single linear laser beam. According to this, the lowermost laser is used to detect an obstacle on a bottom, the uppermost laser is used to detect an obstacle on a top, and an intermediate laser between the lowermost laser and the uppermost laser is used to detect an obstacle at a middle portion.

In the following FIG. 5, an implementation showing an installation aspect of a cleaner 100 and a charging station 510 in a cleaning area will be described.

As shown in FIG. 5, the charging station 510 for charging a battery of the cleaner 100 may be installed in a cleaning area 500. In one implementation, the charging station 510 may be installed at an outer edge of the cleaning area 500.

Although not shown in FIG. 5, the charging station 510 may include a communication device (not shown) capable of emitting different types of signals, and the communication device may perform wireless communication with the communication unit 1100 of the cleaner 100.

The control unit 1800 may control the driving unit 1300 such that the main body of the cleaner 100 is docked to the charging station 510 based on a signal received at the communication unit 1100 from the charging station 510.

The control unit 1800 may move the main body in a direction of the charging station 510 when a remaining capacity of the battery falls below a limit capacity, and control the driving unit 1300 to start a docking function when the main body is close to the charging station 510.

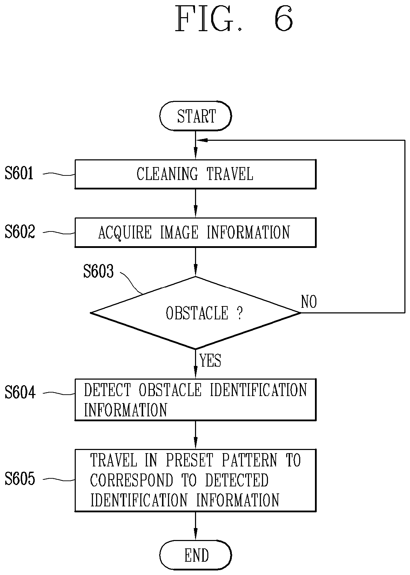

Hereinafter, referring to FIG. 6, an obstacle recognition method of a general cleaner 100 will be described.

The cleaner may perform a cleaning operation (cleaning travel) (S601) and may acquire a plurality of pieces of image information (S602). In general, the cleaner may determine whether the obtained images correspond to an obstacle (S603).

In particular, the general cleaner may detect identification information regarding an obstacle in order to determine a type of the obstacle(S604). For example, the cleaner may detect identification information regarding the obstacle by performing image recognition for the acquired image.

In response to the detected identification information, the cleaner may travel in a preset pattern (S605).

However, as shown in FIG. 6, it is difficult to accurately determine a type of obstacle corresponding to an image through image recognition performed only one time.

Accordingly, the present disclosure proposes an autonomous traveling cleaner that performs an obstacle recognition method configured by a plurality of layers.

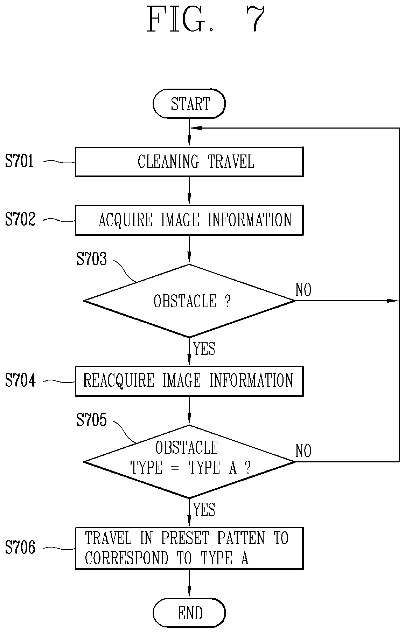

Referring to FIG. 7, the cleaner 100 according to the present disclosure may perform a cleaning operation (S701) within a cleaning area, and the camera of the cleaner 100 may acquire at least one image information during the cleaning operation (S702).

In addition, the control unit 1800 may perform a primary obstacle recognition process by determining one obstacle corresponding to the acquired image, among a plurality of obstacles (S703).

That is, the control unit 1800 may determine whether the image acquired in the primary obstacle recognition process corresponds to a first or second obstacle type among a plurality of obstacle types. The control unit 1800 may also determine that the acquired image does not correspond to any of the plurality of obstacle types.

During the primary obstacle recognition process, when it is determined that the acquired image corresponds to a first obstacle type (Type A), the control unit 1800 may control the camera to reacquire image information (S704).

Although not shown in FIG. 7, the image information reacquisition step (S704) may be omitted. In addition, when the quality of the reacquired image does not meet a preset condition, the control unit 1800 may use the image which has been acquired while traveling (S702), instead of the reacquired image.

Next, the control unit 1800 may perform a secondary obstacle recognition process of determining whether the initially-acquired image or the reacquired image corresponds to the first obstacle type, in order to verify the result of the primary obstacle recognition process (S705).

In this case, the control unit 1800 may perform the image recognition using a recognition algorithm optimized for the first obstacle type.

That is, the control unit 1800 may include a plurality of recognition algorithms respectively corresponding to individual obstacle types. The control unit 1800 may select at least one of the plurality of recognition algorithms corresponding to the result of the primary obstacle recognition process, and verify whether the image corresponds to the first obstacle type based on the selected algorithm.

During the secondary obstacle recognition process, when it is determined that the image corresponds to the first obstacle type, the control unit 1800 may control the cleaner 100 to operate in a traveling (driving) pattern corresponding to the first obstacle type.

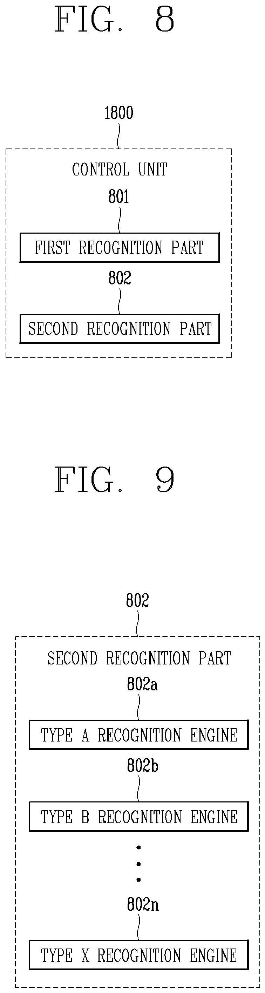

Referring to FIG. 8, the components of the control unit according to the present disclosure are shown.

As shown in FIG. 8, the control unit 1800 may include a first recognition part 801 and a second recognition part 802.

Specifically, after the image is acquired (captured) during traveling (S702), the first recognition part 801 may determine whether the acquired image corresponds to any one of a plurality of obstacle types.

In addition, when the first recognition part 801 determines that the image corresponds to the one of the plurality of obstacle types, the second recognition part 802 may redetermine whether the image corresponds to the one obstacle type.

On the other hand, as shown in FIG. 7, when the first recognition part 801 determines that the image corresponds to the one of the plurality of obstacle types, the control unit 1800 may control the camera to acquire an additional image at a position where the image has been acquired.

In this case, the second recognition part 802 may determine whether the additionally-acquired image corresponds to the obstacle type determined by the first recognition part 801.

That is, the first recognition part 801 may perform a primary obstacle recognition process and the second recognition part 802 may perform a second obstacle recognition process.

Accordingly, the first recognition part 801 may perform a learning operation of setting a first recognition algorithm by using obstacle information corresponding to two or more of the plurality of obstacle types.

Preferably, the first recognition part 801 may set the first recognition algorithm by learning not only a specific type of obstacle information but also all preset types of obstacle information.

In contrast, the second recognition part 802 may include a plurality of recognition modules, and each recognition module may perform a learning operation of setting a second recognition algorithm using obstacle information corresponding to only one obstacle type.

That is, the second recognition part 802 may perform the learning operation of setting the second recognition algorithm by using obstacle information corresponding to any one of the plurality of obstacle types.

Accordingly, even if the same image is input to the first recognition part 801 and any one recognition module of the second recognition part 802, respectively, the first and second recognition parts 801 and 802 may differently determine the probability that the input image corresponds to a specific obstacle type.

In one implementation, the first recognition part 801 may calculate probabilities that the acquired image corresponds to a plurality of obstacle types, respectively.

In addition, the second recognition part 802 may calculate a probability that the acquired image corresponds to at least one obstacle type corresponding to the highest probability among the plurality of probabilities calculated by the first recognition part 801. In this case, the control unit 1800 may compare the probability calculated by the first recognition part 801 with the probability calculated by the second recognition part 802, and perform image recognition for the acquired image based on the comparison result.

Referring to FIG. 9, one implementation of the second recognition part 802 will be described.

As shown in FIG. 9, the second recognition part 802 may include a plurality of recognition modules 802a, 802b, and 802n corresponding to a plurality of obstacle types, respectively.

In one implementation, the second recognition part 802 may select a first obstacle type and a second obstacle type from among the plurality of obstacle types based on magnitudes of the plurality of probabilities calculated by the first recognition part 801. In this case, the first obstacle type is defined as an obstacle type having the highest calculated probability, and the second obstacle type is defined as an obstacle type having the next highest calculated probability. When a difference between the probability that the image corresponds to the first obstacle type and the probability that the image corresponds to the second obstacle type is relatively small, the obstacle recognition may be supplemented by the following method.

The second recognition part 802 may calculate a probability that the image corresponds to the first obstacle type by using the first recognition module corresponding to the first obstacle type, and a probability that the image corresponds to the second obstacle type by using the second recognition module corresponding to the second obstacle type.

In addition, the second recognition part 802 may calculate an increase rate of the probability calculated by the first recognition module to the probability calculated by the first recognition part, in relation to the first obstacle type. Likewise, the second recognition part 802 may calculate an increase rate of the probability calculated by the second recognition module to the probability calculated by the first recognition part, in relation to the second obstacle type.

The second recognition part 802 may determine the obstacle type corresponding to the image based on each calculated increase rate. For example, the second recognition part may finally select any one having the higher increase rate of the probability, of the first and second obstacle types.

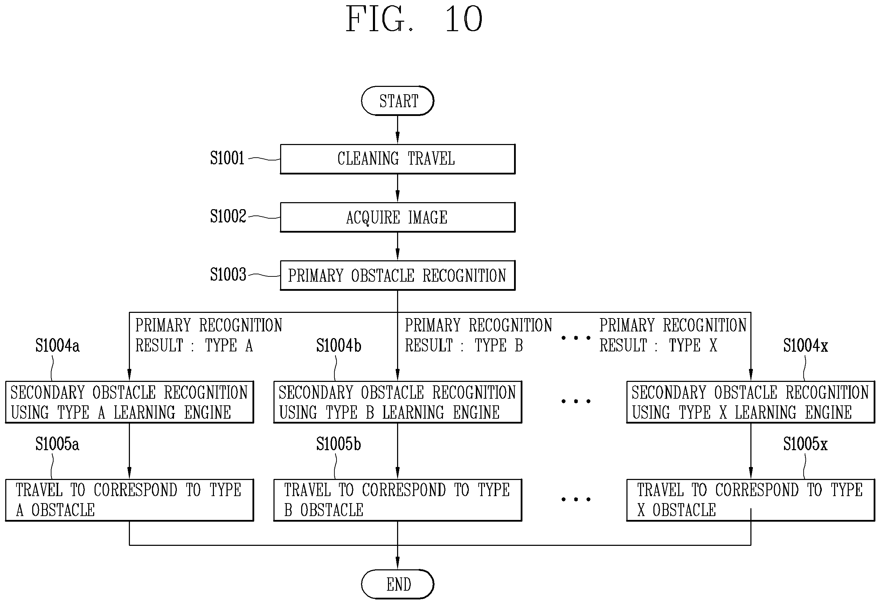

Hereinafter, a method for controlling a cleaner 100 according to the present disclosure will be described with reference to FIG. 10.

The cleaner 100 according to the present disclosure may perform a cleaning operation (S1001) within a cleaning area, and the camera of the cleaner 100 may acquire at least one image information during the cleaning operation (S1002).

In addition, the control unit 1800 may perform a primary obstacle recognition process by determining one obstacle corresponding to the acquired image, among a plurality of obstacles (S1003). In this case, the plurality of obstacle types may be preset by a user.

When it is determined based on the primary obstacle recognition result that the image corresponds to a first obstacle type, the control unit 1800 may perform a secondary obstacle recognition process by redetermining whether the image corresponds to the first obstacle type by using a first recognition module corresponding to the first obstacle type (S1004a).

Likewise, when it is determined based on the primary obstacle recognition result that the image corresponds to a second obstacle type or an xth obstacle type, the control unit 1800 may redetermine whether the image corresponds to the primary obstacle recognition result by using a recognition module corresponding to the determined obstacle type (S1004b, S1004x).

When it is determined in the secondary obstacle recognition process that the image corresponds to the first obstacle type, the control unit 1800 may control the driving unit 1300 based on a traveling pattern corresponding to the first obstacle type (S1005a).

For example, when it is determined in the primary and secondary obstacle recognition processes that the image corresponds to a person, the control unit 1800 may control the driving unit 1300 so that the main body avoids the obstacle corresponding to the image.

According to the present disclosure, since a type of obstacle included in an image can be more accurately identified by using a recognizer configured by a plurality of layers, which may result in improving performance of an autonomous cleaner.

In addition, according to the present disclosure, a secondary recognizer specified for any one obstacle type can verify a recognition result again by using a result of a primary recognizer commonly applied to a plurality of obstacle types, thereby improving obstacle recognition performance of an autonomous cleaner.

## Claims

1. A cleaner (100) performing autonomous traveling, the cleaner (100) comprising:
a main body (110);
a driving unit (1300) configured to move the main body (110) within a cleaning area;
a camera configured to capture an area around the main body (110); and
a control unit (1800) configured to control, on the basis of an image captured by means of the camera, the driving unit (1300) such that a predetermined traveling mode is performed,
wherein the control unit (1800) is configured to:
perform a first recognition process for determining whether the image corresponds to any one of a plurality of obstacle types,
perform a second recognition process for re-determining whether the image corresponds to the one obstacle type to verify a result of the first recognition process, and
control the driving unit (1300) on the basis of the obstacle type determined through the first and second recognition processes such that the main body (110) travels in a preset pattern.

2. The cleaner (100) of claim 1, wherein the control unit (1800) comprises:
a first recognition part configured to determine whether the image corresponds to any one of the plurality of obstacle types after the image is captured; and
a second recognition part configured to redetermine whether the image corresponds to the one obstacle type when the first recognition part has determined that the image corresponds to the one obstacle type.

3. The cleaner (100) of claim 2, wherein the control unit (1800) controls the camera to acquire an additional image at a position where the image has been captured when the first recognition part determines that the image corresponds to the one obstacle type.

4. The cleaner (100) of claim 3, wherein the second recognition part determines whether the acquired additional image corresponds to the obstacle type determined by the first recognition part.

5. The cleaner (100) of claim 2, wherein the first recognition part performs a learning operation of setting a first recognition algorithm by using obstacle information corresponding to at least two of the plurality of obstacle types.

6. The cleaner (100) of claim 2, wherein the second recognition part performs a learning operation of setting a second recognition algorithm by using obstacle information corresponding to one of the plurality of obstacle types.

7. The cleaner (100) of claim 2, wherein the first recognition part calculates respective probabilities that the image corresponds to the plurality of obstacle types, and
wherein the second recognition part calculates a probability that the image corresponds to at least one obstacle type corresponding to a highest probability, among the plurality of probabilities calculated by the first recognition part.

8. The cleaner (100) of claim 7, wherein the control unit (1800) compares the probabilities calculated by the first recognition part with the probability calculated by the second recognition part, and performs image recognition for the image based on a result of the comparison.

9. The cleaner (100) of claim 7, wherein the second recognition part comprises a plurality of recognition modules corresponding to the plurality of obstacle types, respectively.

10. The cleaner (100) of claim 9, wherein the second recognition part is configured to,
select a first obstacle type and a second obstacle type from among the plurality of obstacle types based on magnitudes of the plurality of probabilities calculated by the first recognition part,
calculate a probability that the image corresponds to the first obstacle type by using a first recognition module corresponding to the first obstacle type, and
calculate a probability that the image corresponds to the second obstacle type by using a second recognition module corresponding to the second obstacle type.

11. The cleaner (100) of claim 10, wherein the second recognition part is configured to,
calculate an increase rate of the probability calculated by the first recognition module, with respect to the probability calculated by the first recognition part, in relation to the first obstacle type,
calculate an increase rate of the probability calculated by the second recognition module, with respect to the probability calculated by the first recognition part, in relation to the second obstacle type, and
determine an obstacle type corresponding to the image based on the respectively calculated increase rates.

## Patentansprüche

1. Reiniger (100), der eine autonome Bewegung ausführt, wobei der Reiniger (100) Folgendes umfasst:
einen Hauptkörper (110);
eine Antriebseinheit (1300), die konfiguriert ist, den Hauptkörper (110) in einem Reinigungsbereich zu bewegen;
eine Kamera, die konfiguriert ist, einen Bereich um den Hauptkörper (110) zu erfassen; und
eine Steuereinheit (1800), die konfiguriert ist, auf der Basis eines Bilds, das mittels der Kamera erfasst wurde, die Antriebseinheit (1300) so zu steuern, dass eine zuvor festgelegte Bewegungsbetriebsart ausgeführt wird,
wobei die Steuereinheit (1800) konfiguriert ist zum:
Ausführen eines ersten Erkennungsvorgangs zum Ermitteln, ob das Bild einem von mehreren Hindernistypen entspricht,
Ausführen eines zweiten Erkennungsvorgangs zum erneuten Ermitteln, ob das Bild dem einen Hindernistyp entspricht, um ein Ergebnis des ersten Erkennungsvorgangs zu überprüfen, und
Steuern der Antriebseinheit (1300) auf der Basis des Hindernistyps, der durch den ersten und den zweiten Erkennungsvorgang ermittelt wurde, so dass sich der Hauptkörper (110) in einem zuvor eingestellten Muster bewegt.

2. Reiniger (100) nach Anspruch 1, wobei die Steuereinheit (1800) Folgendes umfasst:
ein erstes Erkennungsteil, das konfiguriert ist, zu ermitteln, ob das Bild einem der mehreren Hindernistypen entspricht, nachdem das Bild erfasst worden ist; und
ein zweites Erkennungsteil, das konfiguriert ist, erneut zu ermitteln, ob das Bild dem einen Hindernistyp entspricht, wenn das erste Erkennungsteil ermittelt hat, dass das Bild dem einen Hindernistyp entspricht.

3. Reiniger (100) nach Anspruch 2, wobei die Steuereinheit (1800) die Kamera steuert, ein zusätzliches Bild bei einer Position zu erfassen, bei der das Bild erfasst worden ist, wenn das erste Erkennungsteil ermittelt hat, dass das Bild dem einen Hindernistyp entspricht.

4. Reiniger (100) nach Anspruch 3, wobei das zweite Erkennungsteil ermittelt, ob das erfasste zusätzliche Bild dem Hindernistyp entspricht, der durch das erste Erkennungsteil ermittelt wurde.

5. Reiniger (100) nach Anspruch 2, wobei das erste Erkennungsteil einen Lernvorgang zum Einstellen eines ersten Erkennungsalgorithmus unter Verwendung von Hindernisinformationen entsprechend wenigstens zwei der mehreren Hindernistypen ausführt.

6. Reiniger (100) nach Anspruch 2, wobei das zweite Erkennungsteil einen Lernvorgang zum Einstellen eines zweiten Erkennungsalgorithmus unter Verwendung von Hindernisinformationen entsprechend einem der mehreren Hindernistypen ausführt.

7. Reiniger (100) nach Anspruch 2, wobei das erste Erkennungsteil jeweilige Wahrscheinlichkeiten berechnet, dass das Bild den mehreren Hindernistypen entspricht, und
wobei das zweite Erkennungsteil eine Wahrscheinlichkeit berechnet, dass das Bild wenigstens einem Hindernistyp entsprechend einer höchsten Wahrscheinlichkeit aus den mehreren Wahrscheinlichkeiten, die durch das erste Erkennungsteil berechnet wurden, entspricht.

8. Reiniger (100) nach Anspruch 7, wobei die Steuereinheit (1800) die Wahrscheinlichkeiten, die durch das erste Erkennungsteil berechnet wurden, mit der Wahrscheinlichkeit, die durch das zweite Erkennungsteil berechnet wurde, vergleicht, und eine Bilderkennung für das Bild auf der Basis eines Ergebnisses des Vergleichs ausführt.

9. Reiniger (100) nach Anspruch 7, wobei das zweite Erkennungsteil jeweils mehrere Erkennungsmodule entsprechend den mehreren Hindernistypen umfasst.

10. Reiniger (100) nach Anspruch 9, wobei das zweite Erkennungsteil konfiguriert ist zum:
Auswählen eines ersten Hindernistyps und eines zweiten Hindernistyps aus den mehreren Hindernistypen auf der Basis von Werten der mehreren Wahrscheinlichkeiten, die durch das erste Erkennungsteil berechnet wurden,
Berechnen einer Wahrscheinlichkeit, dass das Bild dem ersten Hindernistyp entspricht, unter Verwendung eines ersten Erkennungsmoduls entsprechend dem ersten Hindernistyp, und
Berechnen einer Wahrscheinlichkeit, dass das Bild dem zweiten Hindernistyp entspricht, unter Verwendung eines zweiten Erkennungsmoduls entsprechend dem zweiten Hindernistyp.

11. Reiniger (100) nach Anspruch 10, wobei das zweite Erkennungsteil konfiguriert ist zum:
Berechnen einer Zunahmerate der Wahrscheinlichkeit, die durch das erste Erkennungsmodul berechnet wurde, in Bezug auf die Wahrscheinlichkeit, die durch das erste Erkennungsteil berechnet wurde, bezogen auf den ersten Hindernistyp,
Berechnen einer Zunahmerate der Wahrscheinlichkeit, die durch das zweite Erkennungsmodul berechnet wurde, in Bezug auf die Wahrscheinlichkeit, die durch das erste Erkennungsteil berechnet wurde, bezogen auf den zweiten Hindernistyp, und
Ermitteln eines Hindernistyps entsprechend dem Bild auf der Basis der jeweiligen berechneten Zunahmeraten.

## Revendications

1. Appareil de nettoyage (100) effectuant un déplacement autonome, l'appareil de nettoyage (100) comportant :
un corps principal (110) ;
une unité d'entraînement (1300) configurée pour déplacer le corps principal (110) à l'intérieur d'une zone de nettoyage ;
une caméra configurée pour capturer une zone autour du corps principal (110) ; et
une unité de commande (1800) configurée pour commander, sur la base d'une image capturée au moyen de la caméra, l'unité d'entraînement (1300) telle sorte qu'un mode de déplacement prédéterminé est exécuté,
dans lequel l'unité de commande (1800) est configurée pour :
exécuter un premier processus de reconnaissance pour déterminer si l'image correspond à un type quelconque d'une pluralité de types d'obstacle,
exécuter un second processus de reconnaissance pour re-déterminer si l'image correspond au type d'obstacle afin de vérifier un résultat du premier processus de reconnaissance, et
commander l'unité d'entraînement (1300) sur la base du type d'obstacle déterminé par les premier et second processus de reconnaissance de telle sorte que le corps principal (110) se déplace selon un modèle prédéfini.

2. Appareil de nettoyage (100) selon la revendication 1, dans lequel l'unité de commande (1800) comporte :
une première partie de reconnaissance configurée pour déterminer si l'image correspond à un type quelconque de la pluralité de types d'obstacle après que l'image est capturée ; et
une seconde partie de reconnaissance configurée pour re-déterminer si l'image correspond au type d'obstacle lorsque la première partie de reconnaissance a déterminé que l'image correspond au type d'obstacle.

3. Appareil de nettoyage (100) selon la revendication 2, dans lequel l'unité de commande (1800) commande à la caméra d'acquérir une image supplémentaire à une position où l'image a été capturée lorsque la première partie de reconnaissance détermine que l'image correspond au type d'obstacle.

4. Appareil de nettoyage (100) selon la revendication 3, dans lequel la seconde partie de reconnaissance détermine si l'image supplémentaire acquise correspond au type d'obstacle déterminé par la première partie de reconnaissance.

5. Appareil de nettoyage (100) selon la revendication 2, dans lequel la première partie de reconnaissance exécute une opération d'apprentissage consistant à paramétrer un premier algorithme d'apprentissage en utilisant des informations d'obstacle correspondant à au moins deux types de la pluralité de types d'obstacle.

6. Appareil de nettoyage (100) selon la revendication 2, dans lequel la seconde partie de reconnaissance exécute une opération d'apprentissage consistant à paramétrer un second algorithme d'apprentissage en utilisant des informations d'obstacle correspondant à un type de la pluralité de types d'obstacle.

7. Appareil de nettoyage (100) selon la revendication 2, dans lequel la première partie de reconnaissance calcule des probabilités respectives que l'image corresponde à la pluralité de types d'obstacle, et
dans lequel la seconde partie de reconnaissance calcule une probabilité que l'image corresponde à au moins un type d'obstacle correspondant à la plus grande probabilité, parmi la pluralité de probabilités calculées par la première partie de reconnaissance.

8. Appareil de nettoyage (100) selon la revendication 7, dans lequel l'unité de commande (1800) compare les probabilités calculées par la première partie de reconnaissance avec la probabilité calculée par la seconde partie de reconnaissance, et effectue une reconnaissance d'image pour l'image sur la base d'un résultat de la comparaison.

9. Appareil de nettoyage (100) selon la revendication 7, dans lequel la seconde partie de reconnaissance comporte une pluralité de modules de reconnaissance correspondant à la pluralité de types d'obstacle, respectivement.

10. Appareil de nettoyage (100) selon la revendication 9, dans lequel la seconde partie de reconnaissance est configurée pour :
sélectionner un premier type d'obstacle et un second type d'obstacle parmi la pluralité de types d'obstacle sur la base de grandeurs de la pluralité de probabilités calculées par la première partie de reconnaissance,
calculer une probabilité que l'image corresponde au premier type d'obstacle en utilisant un premier module de reconnaissance correspondant au premier type d'obstacle, et
calculer une probabilité que l'image corresponde au second type d'obstacle en utilisant un second module de reconnaissance correspondant au second type d'obstacle.

11. Appareil de nettoyage (100) selon la revendication 10, dans lequel la seconde partie de reconnaissance est configurée pour :
calculer un taux d'augmentation de la probabilité calculée par le premier module de reconnaissance, par rapport à la probabilité calculée par la première partie de reconnaissance, relativement au premier type d'obstacle,
calculer un taux d'augmentation de la probabilité calculée par le second module de reconnaissance, par rapport à la probabilité calculée par la première partie de reconnaissance, relativement au second type d'obstacle, et
déterminer un type d'obstacle correspondant à l'image sur la base des taux d'augmentation respectivement calculés.
